# EUROPÄISCHE PATENTSCHRIFT

(11) **EP 1 317 631 B1**
(45) Veröffentlichungstag und Bekanntmachung des Hinweises auf die Patenterteilung: **23.11.2005**
(21) Anmeldenummer: 01980298.2
(22) Anmeldetag: 29.08.2001
(51) Int. Cl.: F16B 7/04

(54) **VERBINDUNGSTEIL FÜR MONTAGESCHIENEN**
CONNECTING PART FOR MOUNTING RAILS
PIECE DE LIAISON POUR RAILS DE MONTAGE

(30) Priorität: 13.09.2000 DE 10045539
(43) Veröffentlichungstag der Anmeldung: 11.06.2003
(73) Patentinhaber: HALFEN GmbH & CO. Kommanditgesellschaft, 40764 Langenfeld-Richrath (DE)
(72) Erfinder: KIRCHNER, Georg, 42697 Solingen (DE); BINNA, Michael, 46238 Bottrop (DE); GÖRTZ, Beate, 50937 Köln (DE); HANKE, Andreas, 42799 Leichlingen (DE); NEUMANN, Renate, 40595 Düsseldorf (DE)
(74) Vertreter: Riedel, Peter
(86) Internationale Anmeldenummer: PCT/EP2001/009948
(87) Internationale Veröffentlichungsnummer: WO 2002/023053

(56) Entgegenhaltungen:
- DE-A- 1 950 285
- DE-U- 8 529 057
- US-A- 4 053 246
- US-A- 5 605 410

## Beschreibung

Die Erfindung betrifft ein Verbindungsteil zur Anbringung an einer Montageschiene mit den Merkmalen nach dem Oberbegriff des Anspruchs 1.

Montageschienen werden in der Bautechnik für vielfältige Aufgaben eingesetzt. Durch geeignete Verbindungsteile miteinander verbunden, sind aus solchen Montageschienen Rahmenkonstruktionen oder Konsolen mit freitragenden Armen herstellbar, an denen beispielsweise Installationseinrichtungen wie Rohre, Leitungen oder dgl. befestigbar sind. Bei einer geeigneten Auswahl von verschiedenen Verbindungsteilen sind entsprechende Konstruktionen vor Ort nach dem Baukastenprinzip montierbar, ohne daß eine Vorfertigung beispielsweise in einer Werkstatt erforderlich wäre. Wegen der leichten und justierbaren Montierbarkeit sind entsprechende Montageschienensysteme auch häufig beispielsweise im Rohrleitungsbau eingesetzt und überall dort, wo eine stufenlose Anpassung an die örtlichen Gegebenheiten erforderlich ist.

Bei bekannten Montageschienensystemen weisen die Montageschienen einseitig einen Schienenschlitz auf, in dem Hammerkopfschrauben oder entsprechend geformte Muttern festgelegt werden können. Die dadurch herstellbaren Schraubverbindungen tragen eine Vielzahl verschiedener Winkelelemente zur Anbringung von Anbauteilen, Querträgern oder dgl. Bei Ausführungen der Montageschienen mit einem Schienenschlitz und gelochten Seiten- und Rückwänden bzw. zwei Schienenschlitzen (Vorder- und Rückseite) und gelochten Seitenwänden können entsprechende Montagewinkel an allen vier Seiten der Montageschiene befestigt werden.

Eine notwendige formschlüssige und über die ganze Schienenlänge justierbare Montage ist nur an den Schienenschlitzseiten möglich. Durch die Lochungen wird die Tragfähigkeit der Montageschiene erheblich reduziert und eine Anbindung an den gelochten Seiten ist nur stark eingeschränkt möglich. Eine formschlüssige Anbindung bei Langlöchern ist auch nicht gegeben und im Falle einer formschlüssigen Anbindung bei Rundlöchern ist eine Justierbarkeit nicht ausführbar.

Für eine Vielzahl von Befestigungsaufgaben beispielsweise mehrerer Träger in unterschiedlichen Winkeln und Kombinationen zueinander ist die Bereitstellung einer entsprechenden Vielzahl von jeweils an die entsprechende Aufgabe angepaßten Verbindungsteilen erforderlich. Dies führt zu entsprechend hohen Fertigungs- und Lagerhaltungskosten. Die Montage vor Ort wird erschwert, insbesondere wenn in schwer zugänglichen Bereichen Anpassungsarbeiten erforderlich sind, die ggf. zu einem unter Umständen sogar mehrfachen Austauschen verschiedener Verbindungsteile führen können.

Die Anbringung von Befestigungselementen im Bereich des Schienenschlitzes kann bei einer entsprechenden Belastung hohe lokale Spannungen erzeugen. Entsprechende Winkelelemente müssen für eine gute Krafteinleitung entsprechend groß gestaltet sein. Bei einer Montage von zwei sich gegenüberliegenden Verbindungselementen kann bei Montageschienen kleineren Querschnitts eine Überschneidung des Bauraumes für die Halteschrauben vorkommen, in dessen Folge die Positioniermöglichkeiten der Verbindungselemente eingeschränkt sind.

Aus der DE 85 29 057 U ist ein Rohrverbinder bekannt, mittels dessen zwei Rohre in Längsrichtung an ihren beiden angrenzenden Enden verbunden werden können. Der Rohrverbinder weist zwei Halbschalen auf, die an diagonal gegenüberliegenden Eckkanten miteinander verbunden werden. An einer der Kanten sind dazu Klemmschrauben vorgesehen. Die Haltekraft des Rohrverbinders wird dabei ausschließlich mittels der durch die Klemmschrauben aufgebrachten Klemmkraft erzeugt.

Der Erfindung liegt die Aufgabe zugrunde, ein Verbindungsteil mit einem vergrößerten Einsatzbereich zu schaffen.

Die Aufgabe wird durch ein Verbindungsteil mit den Merkmalen des Anspruchs 1 gelöst.

Dazu wird vorgeschlagen, die beiden Klemmvorrichtungen am Befestigungsteil bezüglich dessen Querschnittsebene im Bereich zweier diagonal gegenüberliegender Ecken anzuordnen. Dabei sind zur Erhöhung der Haltekraft in den Wangen mindestens eine Bohrung und bevorzugt in beiden Wangen je zwei symmetrisch angeordnete Bohrungen vorgesehen, durch die Befestigungsschrauben hindurchgeführt werden können. Mit diesen Befestigungsschrauben kann eine innige Verbindung mit der Montageschiene hergestellt werden, wobei vorteilhaft die Befestigungsschraube in einem Schienenschlitz der Montageschiene stufenlos justierbar und formschlüssig festgelegt wird. Zur weiteren Erhöhung der Haltekraft kann es zweckmäßig sein, die Innenseite des Befestigungsteiles reibwerterhöhend durch Anbringung von Zähnen, einer Riffelung oder dgl. zu bearbeiten.

Durch diese Anordnung wirkt die resultierende Klemmkraft im wesentlichen diagonal zum rechteckigen Querschnitt, in dessen Folge alle vier Seiten des Befestigungsteils an die jeweiligen vier Seiten der Montageschiene angedrückt werden. Dadurch entstehen schon bei relativ geringen Spannkräften hohe Haltekräfte, in dessen Folge die Klemmvorrichtungen relativ klein gehalten sein können. Des weiteren stehen durch die diagonale Anordnung der Klemmvorrichtungen vier Seitenteile des Verbindungsteiles zur Verfügung, an denen ohne Einschränkungen durch die Klemmvorrichtungen Anbauteile wie Querträger oder dgl. festgelegt werden können. Insbesondere in Verbindung mit einem quadratischen Querschnitt des Befestigungsteiles in Verbindung mit einem entsprechenden quadratischen Querschnitt der Montageschiene ergeben sich aus dieser Anordnung eine Vielzahl verschiedener Positioniermöglichkeiten, in denen ein und dasselbe Verbindungsteil ohne Rücksicht auf geometrische Einschränkungen beliebig zur Montageschiene positioniert werden kann. Dadurch sind auch schwierige Anpaßarbeiten bei der Montage unter der Vermeidung einer zu großen Vielzahl verschiedener Verbindungsteile vereinfacht.

Zur Erzielung geringer Herstellkosten einerseits und zur leichten Montage mit einfachem Werkzeug andererseits sind die Klemmvorrichtungen als ein Paar von gegeneinander verspannbaren Laschen ausgebildet. Die Laschen weisen jeweils Spannschraublöcher auf, durch die Spannschrauben hindurchführbar und anschließend festziehbar sind. Für eine einfachere Handhabung sind die Ecken der Laschen gebrochen ausgeführt. Die Laschen jeweils einer Klemmvorrichtung sind dabei zweckmäßig mindestens näherungsweise in Richtung der jeweils diagonal gegenüberliegenden Klemmvorrichtung ausgerichtet, wodurch die Laschen selbst und auch die darin gehaltenen Spannschrauben außerhalb des Befestigungsbereiches für Querträger oder dgl. gehalten sind.

In einer vorteilhaften Ausbildung ist das Befestigungselement in zwei getrennte Befestigungsschalen aufgeteilt, von denen jede jeweils zwei rechtwinklig zueinander stehende Wangen aufweist. Die Teilungsebene zwischen den beiden Befestigungsschalen verläuft dabei durch die beiden gegenüberliegenden Klemmvorrichtungen. Durch diese Ausbildung sind in einfacher Weise verschieden ausgebildete Befestigungsschalen miteinander kombinierbar, wodurch mit wenigen Grundelementen eine große Vielzahl verschiedener Kombinationsmöglichkeiten gegeben ist.

Die beiden Befestigungsschalen können lose Einzelteile sein. Je nach Anwendungsfall kann es auch zweckmäßig sein, daß zwei Befestigungsschalen eines Befestigungsteiles mit ihren Stirnseiten an einer Basisplatte angeschweißt sind. Dadurch ist in einfacher Weise eine Profilschiene in axialer Richtung zwischen die Befestigungsschalen einschiebbar und durch Festziehen der Klemmvorrichtung an der Basisplatte festlegbar. Für eine hohe Ausrichtgenauigkeit des festzulegenden Bauteiles sind die Befestigungsschalen im Bereich ihrer angeschweißten Stirnseiten derart beabstandet, dass sie die festzulegende Profilschiene oder dgl. in diesem Bereich näherungsweise spielfrei oder geringfügig klemmend aufnehmen. In Verbindung mit einer präzise ausgeführten Schweißbefestigung der Befestigungsschalen ist dadurch eine hohe winklige Ausrichtgenauigkeit des festzulegenden Bauteiles relativ zur Basisplatte ermöglicht. Für eine einfache Montierbarkeit weisen dabei die Befestigungsschalen im Bereich ihrer freien Stirnseiten im unverspannten Zustand einen größeren Abstand zueinander auf als im Bereich ihrer geschweißten Stirnseiten. Die von den Befestigungsschalen eingeschlossene Öffnung weist dadurch einen leicht konischen oder pyramidenstumpfförmigen Verlauf auf, wodurch das zu befestigende Bauteil in axialer Richtung in einfacher Weise trichterartig eingeführt werden kann. Durch Festziehen der Klemmvorrichtungen im Bereich der freien Stirnseiten liegen auch dort die Befestigungsschalen am festzulegenden Bauteil an, wodurch einerseits hohe Klemmkräfte und andererseits eine hohe Ausrichtgenauigkeit gegeben sind.

In einer zweckmäßigen Weiterbildung ist die Basisplatte durch eine Wange einer weiteren Befestigungsschale gebildet. Dadurch ist ein universelles Bauteil geschaffen, mit dem zwei oder mehr Profilschienen winklig und insbesondere in einem rechten Winkel zueinander festgelegt werden können. Eine derartige Befestigungsschale mit angeschweißten weiteren Befestigungsschalen ist mit einem gleichartigen Bauteil kombinierbar zur winkligen Verbindung von drei Profilschienen. Es ist auch eine Kombination mit einer einfachen Befestigungsschale möglich, wodurch sich eine T-förmige Verbindung zweier Profilschienen ergibt. Es kann ebenfalls zweckmäßig sein, je ein Paar von Befestigungsschalen an je eine Wange einer einzigen Befestigungsschale festzuschweißen. Dadurch sind auch räumliche Eckverbindungen ermöglicht.

In einer vorteilhaften Weiterbildung ist die Basisplatte durch eine Wand einer Montageschiene, einer Profilschiene, bzw. eines Querträgers gebildet. Bei geometrisch vorgegebener Lage des Befestigungsteiles relativ zur Schiene kann das Befestigungsteil vorbereitet an der Schiene festgeschweißt werden, wodurch der spätere Montageaufwand zur Festlegung einer weiteren Schiene auf das Festziehen der Klemmvorrichtung beschränkt ist. Die Basisplatte kann auch eine verschraubbare Sockelplatte sein, wodurch Schienenelemente in einfacher Weise und mit hoher Winkelgenauigkeit an Fußböden, Wänden, anderen Regalbauteilen oder dgl. festgelegt werden können. Dabei ist es vorteilhaft, dass die Basisplatte Langlöcher aufweist, die zur besseren Justierung dienen, und zwar bezüglich der Trägerflanschbreite oder bei Anbringung mittels Dübeln. Es können Langlöcher mit paralleler und/oder orthogonaler Erstreckung vorgesehen sein.

Die Klemmvorrichtungen weisen vorteilhaft mindestens zwei zueinander beabstandete Spannschraublöcher auf, um durch Formschluß quer zur Profilachse und Kraftschluß in Schienenlängsrichtung entsprechend hohe Haltekräfte zu erzielen. In einer zweckmäßigen Variante weist eine Befestigungsschale in ihrer Längsrichtung verteilt eine Vielzahl von Spannschraublöchern auf, wodurch eine weitere Befestigungsschale in verschiedenen Höhenabstufungen an dieser ersten Befestigungsschale festspannbar ist. Insbesondere in Verbindung mit einer Ausbildung der Spannschraublöcher als Langlöcher ist dadurch eine einfache Positionsjustierung entlang der Längsachse des Befestigungsteiles bzw. der Montageschiene ermöglicht. Die Befestigungsschale ist zweckmäßig rotationssymmetrisch zu einer Symmetrieachse ausgebildet, wobei die Symmetrieachse senkrecht auf der Teilungsebene der Befestigungsschalen steht. Durch die derartige Symmetrie kann ein entsprechendes Befestigungsteil nicht nur beliebig um die Längsachse der Montageschiene positioniert werden. Eine einzelne Befestigungsschale kann auch in zwei um 180° gegeneinander verdrehten Positionen an der jeweils gegenüberliegenden Befestigungsschale festgelegt werden, wodurch insbesondere die Vielfalt der Positioniermöglichkeiten von Haltemitteln für Querträger oder dgl. erweitert ist.

Auf Grund der Justierbarkeit der Bauteile auch nach der Montage ist auch eine Vormontage von kompletten Rahmenkonstruktionen möglich, da die vormontierten Baueinheiten vor Ort an die Gegebenheiten angepaßt werden können. Vormontierte Verbindungsteile können ohne Zerlegung in einzelne Halbschalen auf ein freies Ende einer Montageschiene aufgeschoben und nach Justierung mittels der Spannschrauben, der Befestigungsschrauben oder in Kombination davon festgelegt werden.

An einem erfindungsgemäßen Befestigungsteil kann eine Vielzahl verschiedener Haltemittel alternativ oder in Kombination vorgesehen sein. In einer bevorzugten Ausbildung sind die Haltemittel eine Trägeraufnahme für einen quer zur Längsachse des Befestigungsteiles liegenden Querträger. Der Querträger kann ebenfalls eine Montageschiene bevorzugt von der gleichen Art wie die vom Befestigungsteil umschlossene Montageschiene sein. In einer zweckmäßigen Variante ist die Trägeraufnahme für den Querträger durch ein Paar Befestigungsschalen gebildet, die an einer weiteren Befestigungsschale festgeschweißt sind. Dadurch ist ein Querträger mit hoher Winkelgenauigkeit und geringem Ausrichtaufwand schnell und unter Erzielung einer hohen Haltekraft montierbar.

Je nach Anwendungsfall kann es zweckmäßig sein, die Trägeraufnahme mit einem etwa U-förmigen oder mit einem geschlossenen, an den Querschnitt des Querträgers angepaßten Hohlquerschnitt auszubilden. Durch den U-förmigen Querschnitt ist eine leichte Montierbarkeit gegeben, in dem der Querträger sowohl in Richtung dessen Längsachse als auch quer dazu durch die offene Seite des U eingeschoben werden kann. Die Ausbildung der Trägeraufnahme mit einem geschlossenen Hohlquerschnitt führt zu einer sehr hohen Tragfähigkeit hinsichtlich der Aufnahme räumlicher Kräfte und Momente, beispielsweise Biegung und Torsion, so daß die entsprechend ausgeführten Verbindungsteile besonders für hochbelastete Konstruktionen wie Konsolen oder dgl. mit freikragenden Trägerarmen geeignet sind.

Die genannten Trägeraufnahmen weisen zweckmäßig mindestens eine Bohrung zur Durchführung einer Befestigungsschraube auf, mittels derer der entsprechende Querträger festgelegt werden kann. Die entsprechenden Bohrungen und Befestigungsschrauben sind vorteilhaft von der gleichen Art, wie zur Festlegung des Befestigungsteiles an der Montageschiene, so daß mit einer geringen Anzahl verschiedener Grundbauteile eine hohe Variabilität in den Verbindungsmöglichkeiten erzielt ist. Die Trägeraufnahmen insbesondere bei Ausbildung mit einem geschlossenen Hohlquerschnitt weisen zweckmäßig ein Sichtloch auf, durch das die einwandfreie Positionierung des eingeschobenen Querträgers und der Sitz der hinteren Befestigungsschraube kontrollierbar ist. In einer vorteilhaften Variante ist die Trägeraufnahme als ein Zapfen ausgebildet, auf den ein Querträger mit einem Hohlquerschnitt aufschiebbar und beispielsweise mittels einer Schraube festlegbar ist.

Eine universelle Befestigungsmöglichkeit für Anbauteile verschiedener Art ergibt sich aus der Ausbildung der Haltemittel als eine Befestigungsschiene, deren Schienenachse im wesentlichen parallel zur Längsachse des Befestigungsteiles liegt. Entlang der Schiene kann eine einfache Positionsjustierung des festzulegenden Anbauteiles vorgenommen werden, ohne das Verbindungsteil selbst lösen zu müssen. Die Befestigungsschiene weist dabei zweckmäßig einen mit dem Schienenschlitz der Montageschiene vergleichbaren Querschnitt auf, so daß hier die gleiche Art von Befestigungsschrauben eingesetzt werden kann. Für hohe Belastungsanforderungen oder zur Überbrückung eines großen Verstellbereiches kann es zweckmäßig sein, zwei Befestigungsteile vorzusehen, die durch eine Befestigungsschiene miteinander verbunden sind.

Eine große Vielfalt von Befestigungs- und Kombinationsmöglichkeiten ergibt sich aus der Bereitstellung von Verbindungsteilen, bei denen an zwei rechtwinklig zueinander liegenden Wangen jeweils Haltemittel vorgesehen sind. In Kombination mit Befestigungsschalen mit Haltemitteln an nur einer Wange oder auch ohne Haltemittel sind beliebige Verbindungen von Querträgern abgewinkelt, T-förmig oder kreuzförmig möglich.

Die erfindungsgemäßen Verbindungsteile sind kostengünstig herstellbar, da die Formgestaltung eine sehr grobe Toleranz zuläßt und trotzdem die notwendige formschlüssige Anbindung erreicht wird. Außerdem kann das Befestigungsteil aus geformten Blech hergestellt werden, an dem je nach Einsatzzweck Haltemittel durch Schweißen, Nieten oder dgl. festgelegt sein können. Die Formgebung der Verbindungsteile ermöglicht einen fachgerechten Korrosionsschutz beispielsweise durch Feuerverzinkung.

Ausführungsbeispiele der Erfindung werden im folgenden anhand der Zeichnung näher erläutert. Es zeigen:
- Fig. 1: in einer Explosionsdarstellung ein Montageschienensystem mit seinen wesentlichen Komponenten;
- Fig. 2: das System nach Fig. 1 mit einer Variante der Verbindungsteile;
- Fig. 3: in einer Querschnittsdarstellung eine Montageschiene mit einem sie umschließenden Verbindungsteil;
- Fig. 4: in einer perspektivischen Darstellung ein Verbindungsteil mit einer als Hohlquerschnitt ausgeführten Trägeraufnahme;
- Fig. 5: in einer Querschnittsdarstellung die Trägeraufnahme nach Fig. 4 mit einem darin gehaltenen Querträger;
- Fig. 6: eine Variante des Verbindungsteiles nach Fig. 4 mit einem U-förmigen Trägerhalter;
- Fig. 7: eine weitere Variante des Verbindungsteiles mit einem Zapfen für einen aufzuschiebenden Hohlquerschnitt;
- Fig. 8: eine schematische Darstellung zweier über Befestigungsschienen miteinander verbundener Befestigungsteile;
- Fig. 9: in einer Prinzipsskizze zeigt verschiedene Befestigungsschalen mit einer Vielzahl von Langlöchern;
- Fig. 10: in einer perspektivischen Darstellung eine Variante des Verbindungsteiles mit einem angeschweißten Querträger;
- Fig. 11: eine Prinzipdarstellung eines Befestigungsteiles mit diagonal ausgerichteten Klemmlaschen;
- Fig. 12: eine Variante der Ausführung nach Fig. 11 mit parallel zu einer Seitenfläche angeordneten Klemmlaschen;
- Fig. 13: eine Prinzipdarstellung einer einteiligen Ausführung des Befestigungsteiles;
- Fig. 14: eine Variante der Anordnung nach Fig. 13 mit einem geschlossenen Hohlquerschnitt;
- Fig. 15: in perspektivischer Darstellung zwei jeweils auf eine Befestigungschale aufgeschweißte Befestigungsteile;
- Fig. 16: eine perspektivische Ansicht eines Paares von auf eine Montageschiene aufgeschweißten Befestigungsschalen;
- Fig. 17: eine Variante der Anordnung nach Fig. 16 mit auf einer Sockelplatte angeschweißten Befestigungsschalen.

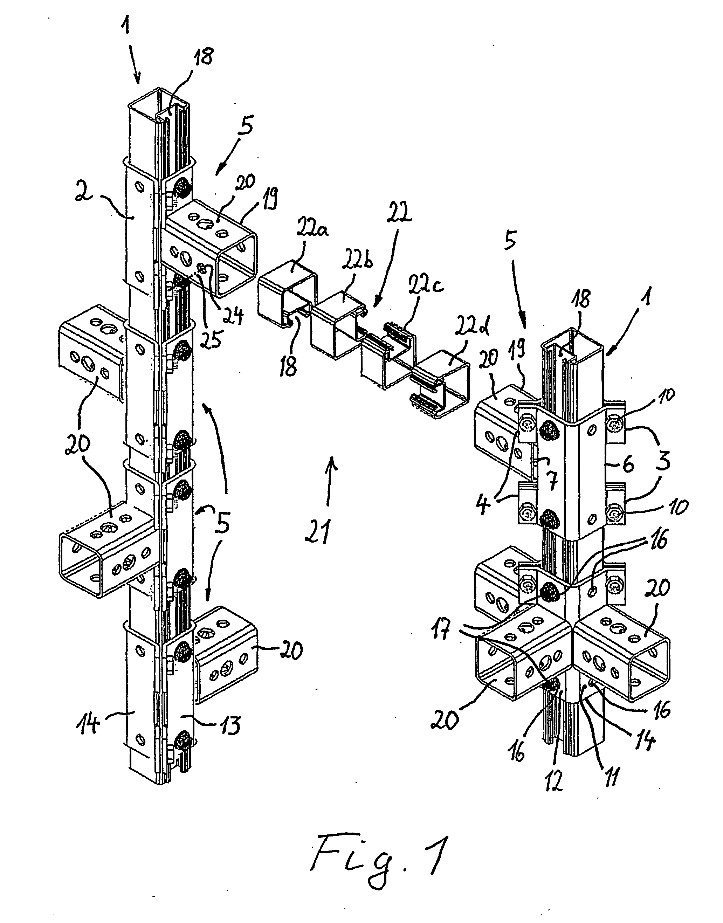

Fig. 1 zeigt in einer perspektivischen Übersichtsdarstellung als schematische Explosionszeichnung eine Rahmenkonstruktion aus zwei vertikalen Montageschienen 1, zwischen denen horizontal ein Querträger 21 liegt. Der Querträger 21 ist mit jeweils einem Verbindungsteil 5 an den beiden Montageschienen 1 festgelegt. Die den Querträger 21 haltenden Verbindungsteile 5 bestehen aus die Montageschiene 1 allseitig umschließenden Befestigungsteilen 2 mit Haltemitteln 19 in Form einer Trägeraufnahme 20 für den Querträger 21. Die Trägeraufnahmen 20 weisen eine Vielzahl von Bohrungen 24 für angedeutete Befestigungsschrauben 25 auf. Der Querträger 21 ist als Montageschiene 22 ausgebildet, die von der gleichen Art wie die Montageschiene 1 ist und einen Schienenschlitz 18 aufweist. Die Montageschiene 22 ist in verschiedenen relativen Ausrichtungen zu den Trägeraufnahmen 20 montierbar, dargestellt durch vier Segmente 22a, 22b, 22c, 22d der Montageschiene 22 mit jeweils unterschiedlicher Positionierung des Schienenschlitzes 18. Je nach Positionierung des Schienenschlitzes 18 der Montageschiene 22 werden die Befestigungsschrauben 25 durch die entsprechende Bohrung 24 hindurchgeführt und formschlüssig im Schienenschlitz 18 festgelegt.

Die Befestigungsteile 2 weisen Klemmvorrichtungen 3, 4 auf, die bezüglich der Querschnittsebene des Befestigungsteiles 2 im Bereich zweier diagonal gegenüberliegender Ecken 6, 7 angeordnet sind. Die Klemmvorrichtungen 3, 4 sind durch jeweils zwei zueinander beabstandete Spannschrauben 10 verspannt. Die Befestigungsteile 2 sind in zwei getrennte, jeweils zwei rechtwinklig zueinander stehende Wangen 11, 12 aufweisende Befestigungsschalen 13, 14-aufgeteilt. Jede der Wangen 11, 12 weist jeweils zwei Bohrungen 16 für Befestigungsschrauben 17 auf. Die Bohrungen 16 sind symmetrisch zueinander angeordnet. Daraus ergibt sich eine Vielzahl verschiedener relativer Positioniermöglichkeiten der gezeigten Verbindungsteile 5 gegenüber der Montageschiene 1 bzw. gegenüber dem Querträger 21. Im rechten Teil der Fig. 1 ist eine Befestigungsschale 14 gezeigt, an deren beiden Wangen 11, 12 jeweils eine Trägeraufnahme 20 angeordnet ist und die mittels zweier Befestigungsschrauben 17 formschlüssig im Schienenschlitz 18 der Montageschiene 1 festgelegt ist. Die Befestigungsschrauben 17 sind vorzugsweise in der Weise ausgeführt wie sie in der DE 297 14 621 U1 beschrieben ist.

Im linken Teil der Fig. 1 sind Verbindungsteile 5 gezeigt, bei denen an einer Befestigungsschale 13 nur eine Trägeraufnahme 20 vorgesehen ist und bei denen eine weitere Befestigungsschale 14 keinerlei Haltemittel 19 aufweist. Die gezeigten Verbindungsteile 5 sind in verschiedenen relativen Positionen zum Schienenschlitz 18 an der Montageschiene 1 gezeigt.

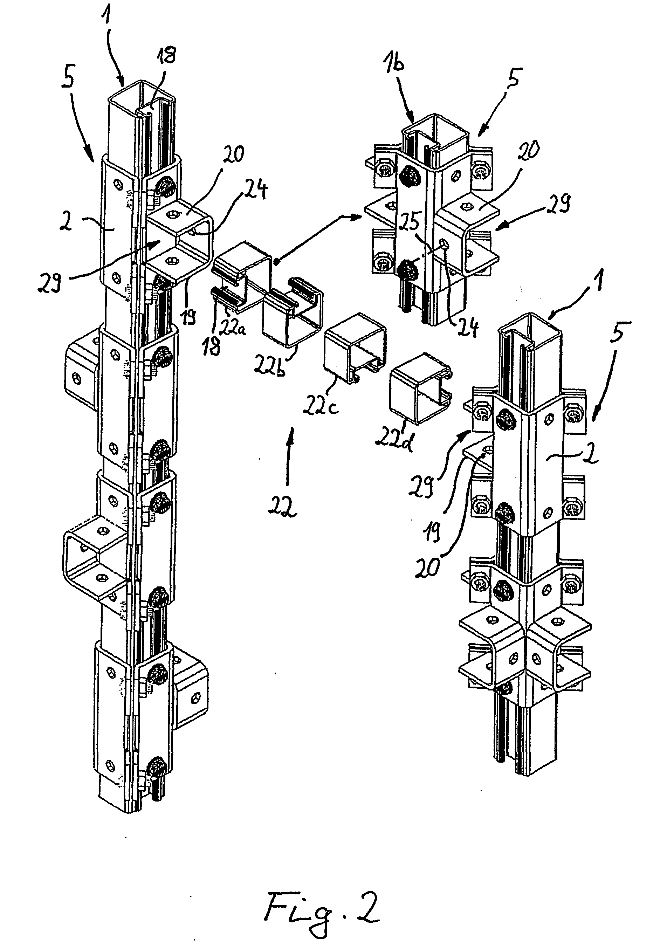

Fig. 2 zeigt ein Montageschienensystem, bei dem an den Befestigungsteilen 2 der Verbindungsteile 5 Haltemittel 19 in Form von Trägeraufnahmen 20 mit einem U-förmigen Querschnitt festgelegt sind. Vergleichbar zur Fig. 1 ist die Montageschiene 22 in vier Segmenten 22a, 22b, 22c, 22d mit jeweils unterschiedlicher Ausrichtung des Schienenschlitzes 18 gezeigt. An den beiden vertikalen Montageschienen 1 sind die Befestigungsteile 2 derart festgelegt, daß zwei offene Seiten 29 der beiden Trägeraufnahmen 20 in die gleiche Richtung weisen. In der gezeigten Anordnung kann durch die Bohrungen 24 die Montageschiene 22 an ihrem Schienenschlitz 18 in den Positionen 22b, 22c und 22d festgelegt werden. Bei einer Ausrichtung der Montageschiene 22 mit ihrem Schienenschlitz 18 in der Position 22a kann das Verbindungsteil 5 wie bei der Montageschiene 1b gezeigt, ausgerichtet und festgelegt sein. Der Schienenschlitz 18 grenzt dabei an eine der Bohrungen 24 in der Trägeraufnahme 20 an und kann durch eine entsprechende Befestigungsschraube 25 festgelegt werden.

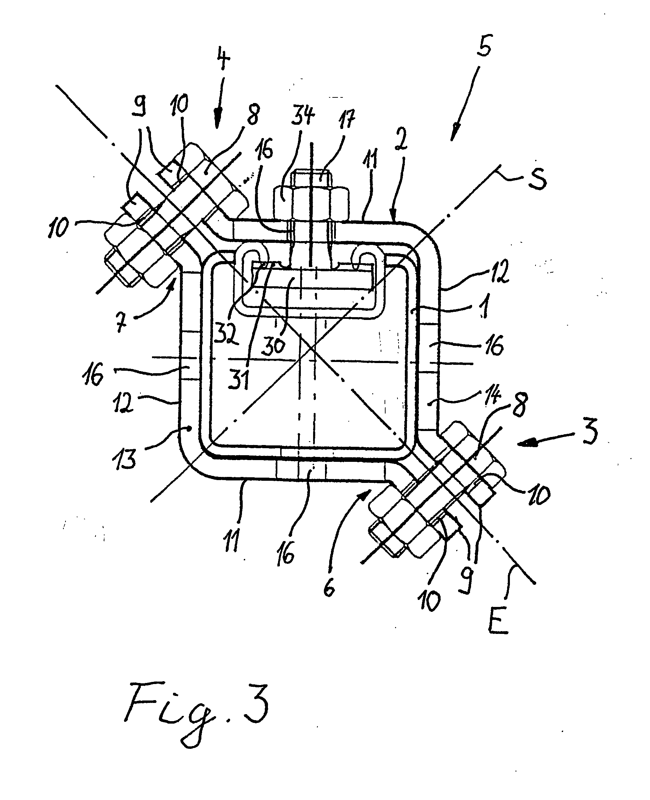

Fig. 3 zeigt einen Querschnitt durch eine Montageschiene 1 mit einem im wesentlichen quadratischen Querschnitt, die einseitig einen Schienenschlitz 18 aufweist. Ein Verbindungsteil 5 weist ein Befestigungsteil 2 mit ebenfalls einem etwa quadratischen Querschnitt auf, welches die Montageschiene 1 allseitig umschließt. Das Befestigungsteil 2 ist in zwei getrennte Befestigungsschalen 13, 14 aufgeteilt, die jeweils zwei rechtwinklig zueinander stehende Wangen 11, 12 aufweisen. An die Wangen 11, 12 grenzen Laschen 9 mit Spannschraublöchern 10 und hindurchgeführten Spannschrauben 8 an, welche Klemmvorrichtungen 3, 4 zur klemmenden Festlegung des Verbindungsteils 5 an der Montageschiene 1 bilden. Die Hälfte der Spannschraublöcher 10 kann auch beispielsweise in wechselseitiger Anordnung als Gewindebohrung ausgeführt sein, in die die Spannschrauben 8 direkt einschraubbar sind. Die beiden Klemmvorrichtungen 3, 4 sind in der gezeigten Querschnittsebene des Befestigungsteils 2 im Bereich zweier diagonal gegenüberliegender Ecken 6, 7 angeordnet. Durch die beiden Klemmvorrichtungen 3, 4 verläuft eine Teilungsebene E, zu deren beiden Seiten die getrennt ausgebildeten Befestigungsschalen 13, 14 liegen. Die benachbarten Laschen 9 sind zueinander beabstandet, in dessen Folge durch Festziehen der Spannschrauben 8 die beiden Befestigungsschalen 13, 14 an der Montageschiene 1 klemmend festgelegt werden können. Durch den Spalt zwischen den verspannbaren Laschen 9 ist beim Anziehen der beiden Spannschrauben 8 ein Toleranzausgleich gewährleistet.

Die beiden Befestigungsschalen 13, 14 sind im wesentlichen rotationssymmetrisch zu einer Symmetrieachse S ausgebildet, die senkrecht zur Teilungsebene E liegt. Die beiden Wangen 11, 12 der beiden Befestigungsschalen 13, 14 weisen jeweils mindestens eine Bohrung 16 auf. Durch die an den Schienenschlitz 18 angrenzende Bohrung 16 ist eine Befestigungsschraube 17 hindurchgeführt, mittels derer das Verbindungsteil 5 formschlüssig an der Montageschiene 1 festgelegt ist. Dazu weist die Befestigungsschraube 17 einen in dem Schienenschlitz 18 liegenden Kopf 30 mit einer Verzahnung 31 auf, die eine verzahnte Kante 32 des Schienenschlitzes 18 hintergreift. Die Befestigungsschraube 17 ist durch eine Mutter 34 festgezogen. Durch den im wesentlichen quadratischen Querschnitt der Montageschiene 1 und des Befestigungsteiles 2 ist auch eine Festlegung des Verbindungsteiles 5 an der Montageschiene 1 relativ zueinander um 90°, 180° und 270° gegenüber der gezeigten Position verdreht möglich. Dabei liegt jeweils eine der Bohrungen 16 im Bereich des Schienenschlitzes 18, wodurch eine Festlegung mit einer Befestigungsschraube ermöglicht ist. Die Laschen 9 der beiden Klemmvorrichtungen 3, 4 sind in Richtung der jeweils diagonal gegenüberliegenden Klemmvorrichtungen 4, 3 ausgerichtet, wodurch die Spannschrauben 8 und die Befestigungsschrauben 17 zueinander beabstandet sind.

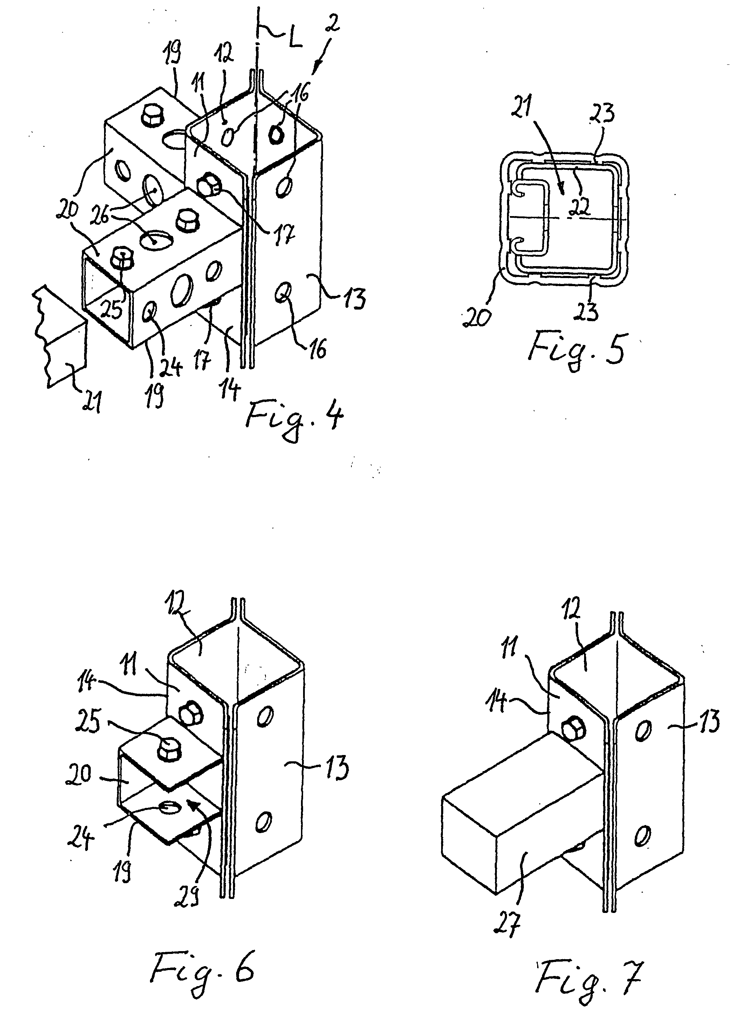

Fig. 4 zeigt in einer perspektivischer Darstellung zwei aneinander liegende Befestigungsschalen 13, 14. An den beiden Wangen 11, 12 der Befestigungsschale sind jeweils Haltemittel 19 in Form einer Trägeraufnahme 20 mit einem geschlossenen, etwa quadratischen Querschnitt vorgesehen. Die beiden Trägeraufnahmen 20 sind zur Aufnahme eines quer zur Längsachse L des Befestigungsteiles 2 liegenden Querträgers 21 vorgesehen und weisen dazu eine Reihe von Bohrungen 24 für Befestigungsschrauben 25 sowie Sichtlöcher 26 auf. Die Befestigungsschale 13 weist keinerlei Haltemittel 19 auf. Neben den zuvor oder nachfolgend beschriebenen Haltemitteln 19 im Form von Trägeraufnahmen 20, Befestigungsschienen 28 etc. können jedoch auch beliebig anders ausgebildete Haltemittel 19 wie Haken, Ösen oder dgl. für beliebige Anbauteile vorgesehen sein. In den beiden Wangen 11, 12 der beiden Befestigungsschalen 13, 14 sind jeweils im oberen und unteren Bereich symmetrisch zueinander angeordnete Bohrungen 16 für die weiter oben beschriebenen Befestigungsschrauben 17 vorgesehen. Durch die ebenfalls oben beschriebene symmetrische Ausbildung der Befestigungsschalen 13, 14 und der symmetrischen Anordnung der Bohrungen 16 ist ein beliebiger Austausch bzw. ein gegeneinander verdrehtes Montieren der Befestigungsschalen 13, 14 ermöglicht.

Fig. 5 zeigt einen Querschnitt durch eine Trägeraufnahme 20 nach Fig. 4 mit einem im wesentlichen quadratischen, geschlossenen Querschnitt. In der Trägeraufnahme 20 ist eine Querträger 21 in Form einer Montageschiene 22 mit ebenfalls einem im wesentlichen quadratischen Querschnitt gehalten, in dem innenseitige Anlagenasen 23 der Trägeraufnahme 20 den Querträger 21 abstützen. Die Montageschiene 22 entspricht in ihrer Beschaffenheit der in den Fig. 1 und 2 gezeigten Montageschiene 1, kann aber auch einen beliebigen anderen, geeigneten Querschnitt aufweisen.

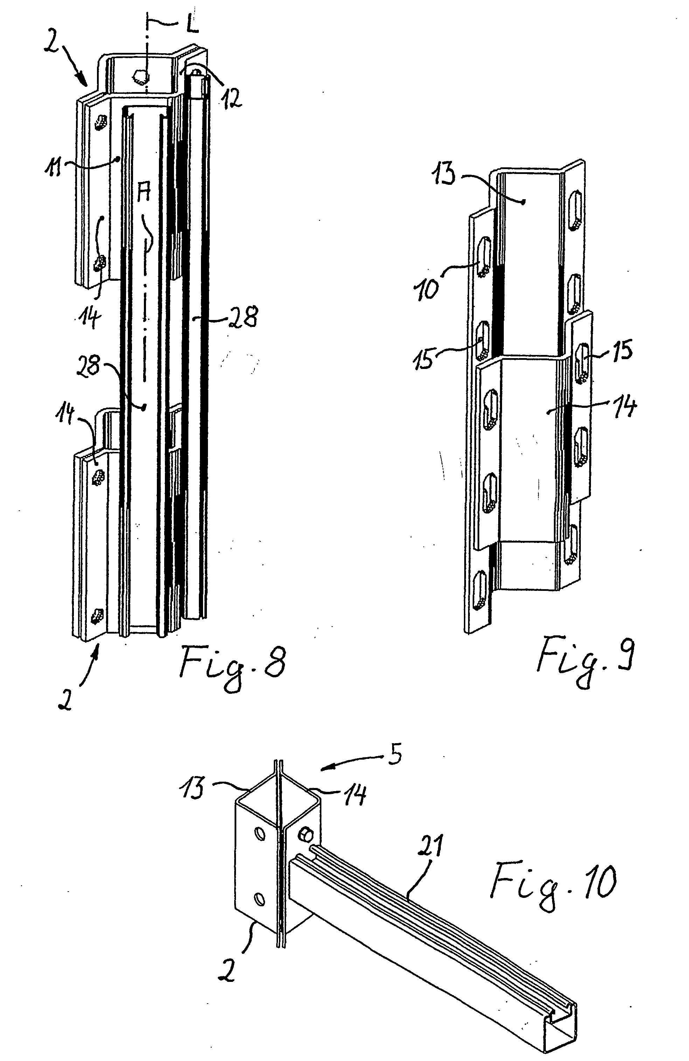

Fig. 6 zeigt eine Variante der Befestigungsmittel 19 in Form einer Trägeraufnahme 20, die einen etwa U-förmigen Querschnitt mit einer offenen Seite 29 und Bohrungen 24 für Befestigungsschrauben 25 aufweist. Bei der Variante nach Fig. 7 sind die Haltemittel 19 als Zapfen 27 ausgebildet, auf den ein Querträger 21 mit einem Hohlquerschnitt aufschiebbar ist.

Fig. 8 zeigt eine Anordnung aus zwei Befestigungsteilen 2, die mittels zweier, an den beiden Wangen 11, 12 jeweils einer Befestigungsschale 14 angebrachter Befestigungsschienen 28 miteinander verbunden sind. Die Schienenachsen A der Befestigungsschienen 28 liegen im wesentlichen parallel zur Längsachse L der beiden Befestigungsteile 2. Die Haltemittel 19 können, wie gezeigt an beiden Wangen 11, 12 oder auch an nur einer der beiden Wangen 11, 12 vorgesehen sein.

Fig. 9 zeigt zwei Befestigungsschalen 13, 14, bei denen die Spannschraublöcher 10 als Langlöcher 15 ausgebildet sind. An der Befestigungsschale 13 sind eine Vielzahl dieser als Langlöcher 15 ausgebildeten Spannschraublöcher 10 vorgesehen, wodurch eine höhenverstellbare Festlegung der Befestigungsschale 14 ermöglicht ist.

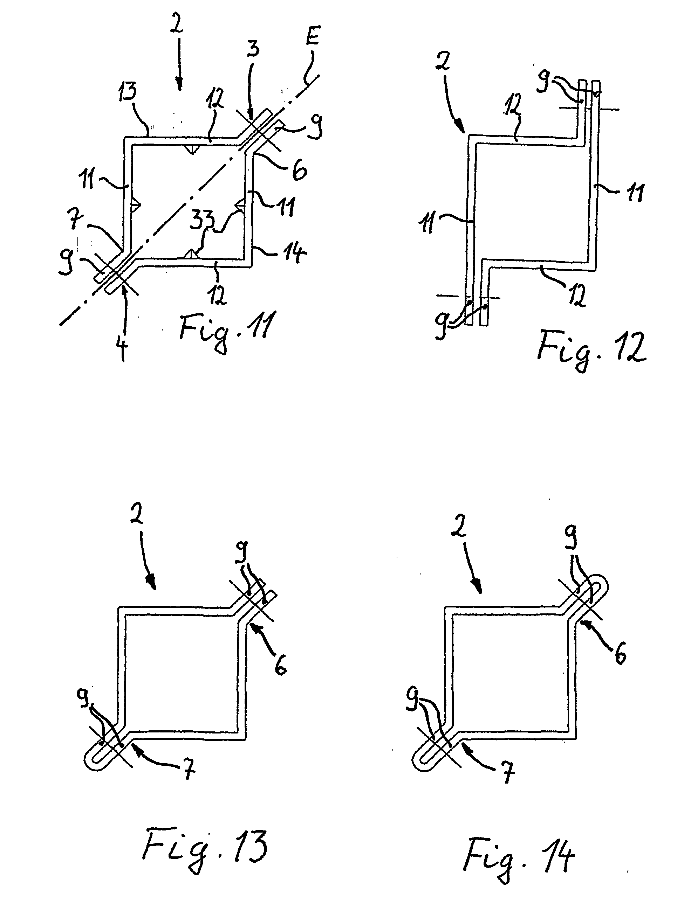

Eine weitere Befestigungsmöglichkeit ist noch in Fig. 10 gezeigt, bei der an einer Befestigungsschale 14 ein Querträger 21 festgeschweißt ist. Die zuvor gezeigten Befestigungsteile 2 können auf dem Wege des Zerspanens oder gußtechnisch hergestellt sein und bestehen in den gezeigten Ausführungsbeispielen aus gestanztem und abgekantetem Blech.

Fig. 11 zeigt in einer prinzipiellen Querschnittsdarstellung die Grundform des Befestigungsteiles 2, bei dem an zwei gegenüberliegenden Ecken 6, 7 je eine Klemmvorrichtung 3, 4 vorgesehen ist. Es können auch Ausführungen zweckmäßig sein, bei denen an Stelle von einer der Klemmvorrichtungen 3, 4 eine gelenkige Verbindung der Befestigungsschalen 13, 14 beispielsweise durch ineinander greifende Haken vorgesehen ist. Das Befestigungsteil 2 ist durch eine durch die Klemmvorrichtungen 3, 4 verlaufende Teilungsebene E in zwei Befestigungsschalen 13, 14 mit jeweils zwei rechtwinklig zueinander stehenden Wangen 11, 12 aufgeteilt. Die Strukturierung der Innenseite der Befestigungsschalen 13, 14 kann eine zusätzliche Reibwerterhöhung ermöglichen. Alternativ kann durch eine Anzahl von Zähnen 33 eine formschlüssige Verbindung mit einer Montageschiene 1 erzielt werden. Es können auch eine Riffelung oder Nasen vergleichbar zu den Anlagenasen 23 nach Fig. 5 vorgesehen sein. Die Laschen 9 der Klemmvorrichtungen 3, 4 sind in Richtung der diagonal gegenüberliegenden Klemmvorrichtungen 4, 3 ausgerichtet. Bei der in Fig. 12 gezeigten Alternative liegen die Wangen 9 parallel zu den jeweiligen Wangen 11. Fig. 13 zeigt eine weitere Variante, bei der das Befestigungsteil 2 einteilig durch Abkanten ausgebildet ist, indem die beiden Laschen 9 im Bereich der Ecke 7 miteinander verbunden sind. In einer weiteren Variante nach Fig. 14 ist das Befestigungsteil 2 in Form eines geschlossenen Rohrquerschnittes ausgebildet, bei dem die jeweils aneinander angrenzenden Laschen 9 beider Ecken 6, 7 miteinander verbunden sind.

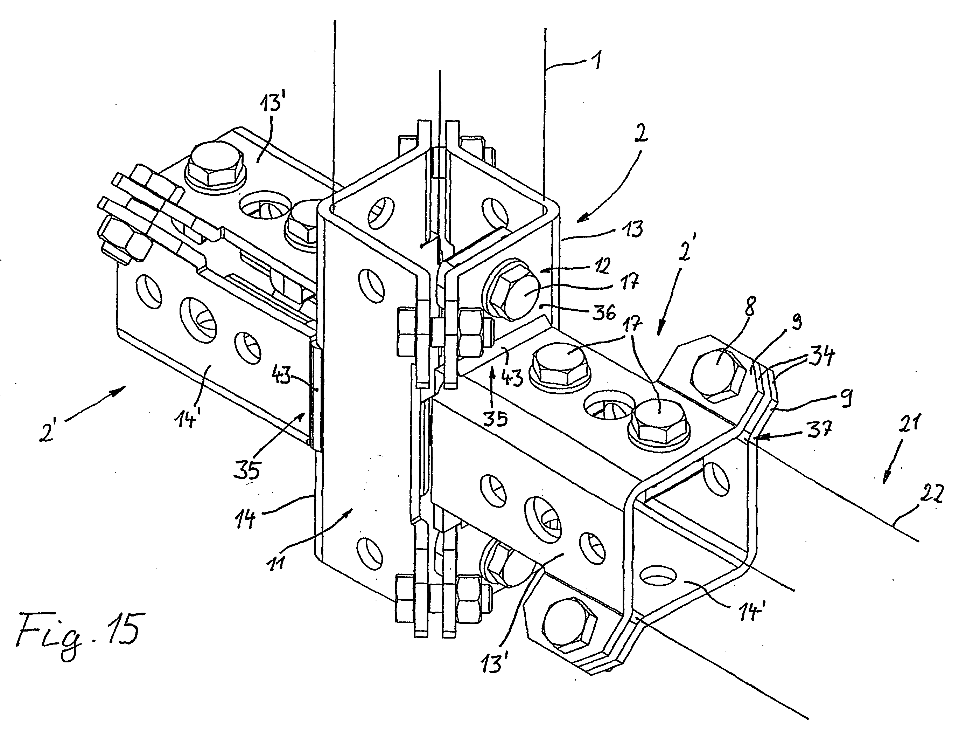

Fig. 15 zeigt ein Befestigungsteil 2, welches zwei rotationssymmetrisch ausgebildete Befestigungsschalen 13, 14 vergleichbar zum Ausführungsbeispiel nach Fig. 3 aufweist. Jeweils eine Wange 12 der beiden Befestigungsschalen 13, 14 bildet eine Basisplatte 36, an der jeweils zwei weitere Befestigungsschalen 13', 14' eines Befestigungsteiles 2' mit ihren Stirnseiten 35 mittels Schweißnähten 43 angeschweißt sind. Auch an den übrigen Wangen 11 können entsprechende Befestigungsteile 2' angeschweißt sein. An ihren den verschweißten Stirnseiten 35 gegenüber liegenden freien Stirnseiten 37 sind Laschen 9 mit Spannschrauben 8 vorgesehen, über die die Befestigungsschalen 13', 14' gegeneinander verspannbar sind. Alle Laschen 9 weisen gebrochene Ecken 34 auf.

Das Befestigungsteil 2 ist an einer angedeuteten Montageschiene 1 vergleichbar zu Fig. 1 klemmend festgelegt. Als zusätzliche Sicherung gegen axiales Verrutschen sind Befestigungsschrauben 17 vorgesehen. In den Befestigungsteilen 2' sind angedeutete Querträger 21 in Form von Profilschienen 22 klemmend gehalten und durch Befestigungsschrauben 17 axial gesichert. Anstelle der Profilschienen 22 können auch eine Montageschiene 1 oder beliebige andere geeignete Profile, Vierkantrohre oder dgl. vorgesehen sein. Zur präzisen winkligen Ausrichtung der Profilschiene 22 relativ zur Basisplatte 36 sind die Befestigungsschalen 13', 14' im Bereich ihrer angeschweißten Stirnseiten 35 derart beabstandet, dass sie die Profilschiene 22 in diesem Bereich näherungsweise spielfrei oder geringfügig klemmend aufnehmen. Im Bereich der freien Stirnseiten 37 weisen die Befestigungsschalen 13', 14' im unverspannten Zustand einen größeren Abstand zueinander auf als im Bereich der angeschweißten Stirnseiten 35. Durch Anziehen der Spannschrauben 8 liegen die Befestigungsschalen 13', 14' flächig an der Profilschiene 22 an, wodurch eine klemmende und winkelgenaue Halterung der Profilschiene 22 gegeben ist. Im gezeigten Ausführungsbeispiel ist ein rechter Winkel zwischen der Montageschiene 1 und der Profilschiene 22 vorgesehen, es kann jedoch ein anderer geeigneter Winkel vorgesehen sein.

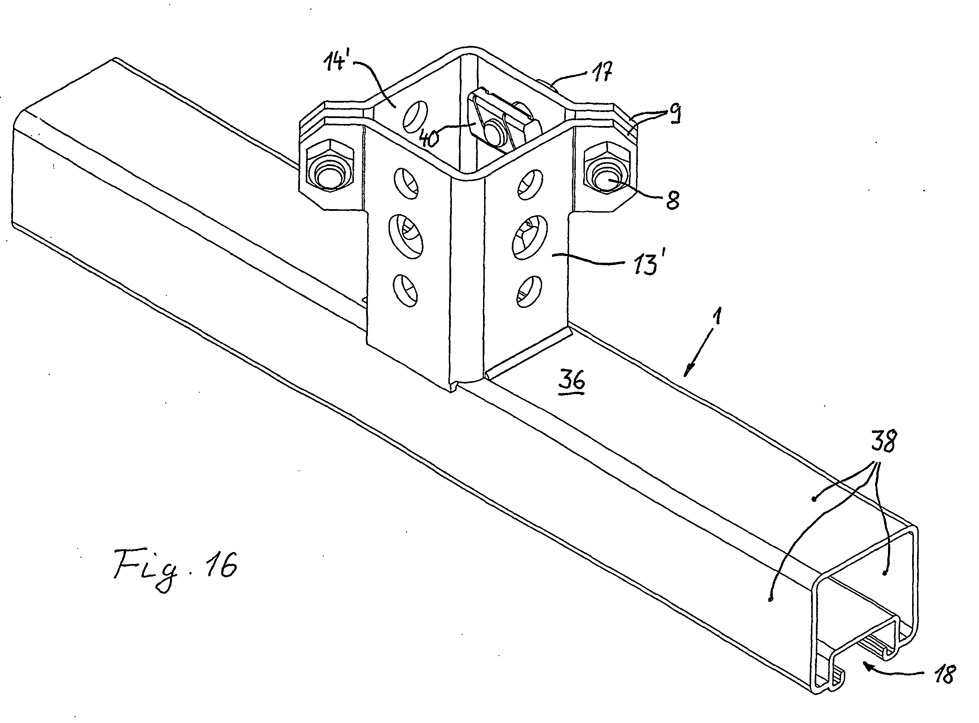

Fig. 16 zeigt eine Variante, bei der die Basisplatte 36 durch eine Wand 38 einer Montageschiene 1 gebildet ist. Im gezeigten Ausführungsbeispiel liegt die Wand 38 gegenüber dem Schienenschlitz 18, es kann jedoch auch eine andere Wand 38 vorgesehen sein. An der Basisplatte 36 sind Befestigungsschalen 13', 14' festgeschweißt, die in ihren übrigen Merkmalen und Bezugszeichen mit dem Ausführungsbeispiel nach Fig. 15 übereinstimmen. Die von außen eingesteckte Befestigungsschraube 17 greift in einen Nutenstein 40, der vergleichbar zum Kopf 30 mit einer Verzahnung 31 der Schraube 17 nach Fig. 3 ausgebildet ist, und wodurch eine Montageschiene 1 oder eine Profilschiene 22 vergleichbar zu den Ausführungsbeispielen nach den Fig. 3 und 15 axial sicherbar ist.

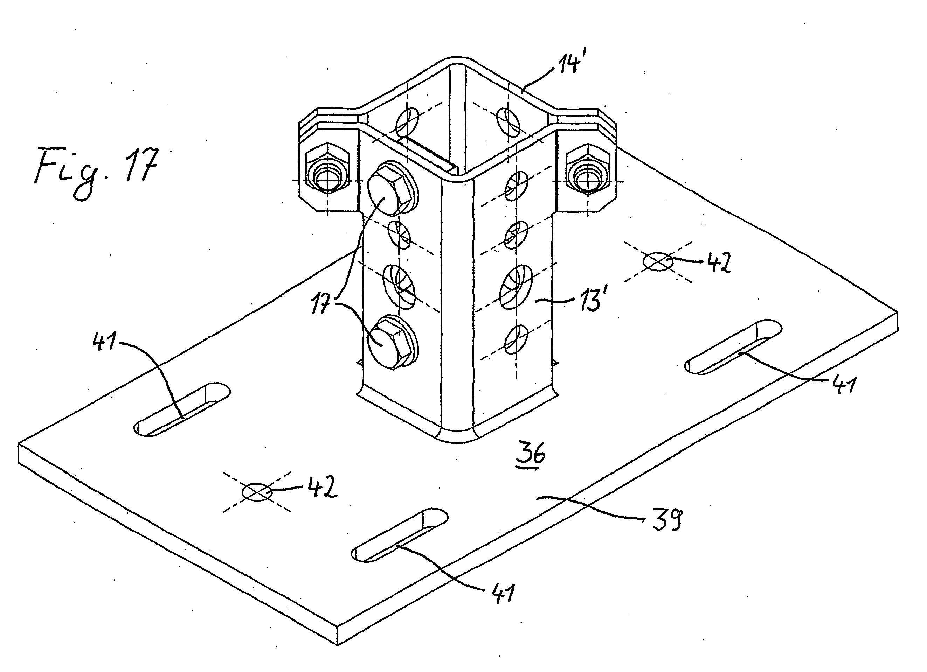

Beim Ausführungsbeispiel nach Fig. 17 ist die Basisplatte 36 durch eine Sockelplatte 39 gebildet, an der im rechten Winkel zur Plattenebene Befestigungsschalen 13', 14' angeschweißt sind. In den übrigen Merkmalen und Bezugszeichen entsprechend die Befestigungsschalen 13', 14' den Ausführungsbeispielen nach den Fig. 15 und 16. Die Sockelplatte 39 weist eine Anzahl von Langlöchern 41 zur justierbaren Anbindung und Rundlöchern 42 auf, über die sie mit einem Fußboden, einer Wand, weiteren Regalbauteilen oder dgl. verschraubbar ist.

## Patentansprüche

1. Verbindungsteil zur Anbringung an einer Montageschiene (1), mit einem einen mindestens näherungsweise rechteckigen Querschnitt aufweisenden Befestigungsteil (2, 2'), welches Wangen (11, 11', 12, 12') aufweist und im montierten Zustand die Montageschiene (1) mit einem entsprechenden, durch die Wangen (11, 11', 12, 12') gebildeten Querschnitt allseitig umschließt und welches mindestens eine Klemmvorrichtung (3, 4) zur klemmenden Festlegung des Verbindungsteils (5) an der Montageschiene (1) aufweist, die bezüglich der Querschnittsebene des Befestigungsteils (2, 2') im Bereich zweier diagonal gegenüberliegender Ecken (6, 7) angeordnet ist oder sind,
**dadurch gekennzeichnet, daß** in den Wangen (11, 11', 12, 12') mindestens eine Bohrung (16) zur Durchführung einer in die Montageschiene (1) greifenden Befestigungsschraube (17) des Verbindungsteils (5) vorgesehen ist.

2. Verbindungsteil nach Anspruch 1,
**dadurch gekennzeichnet, daß** die Befestigungsschraube (17) des Verbindungsteiles (5) zur formschlüssigen Festlegung in einem Schienenschlitz (18) der Montageschiene (1) vorgesehen ist.

3. Verbindungsteil nach Anspruch 1 und 2,
**dadurch gekennzeichnet, daß** in den Wangen (11, 11', 12, 12') des Befestigungsteiles (2, 2') je zwei rotationssymmetrisch zu einer Symmetrieachse (S) angeordnete Bohrungen (16) vorgesehen sind, wobei die Symmetrieachse (S) senkrecht auf einer Teilungsebene (E), die das Befestigungsteil in zwei Befestigungsschalen (13, 14) teilt, steht.

4. Verbindungsteil nach einem der Ansprüche 1 bis 3,
**dadurch gekennzeichnet, daß** das Befestigungsteil (2, 2') einen mindestens annähernd quadratischen Querschnitt aufweist.

5. Verbindungsteil nach einem der Ansprüche 1 bis 4,
**dadurch gekennzeichnet, daß** die Klemmvorrichtung (3, 4) als Spannschrauben (8) und ein Paar von gegeneinander durch die Spannschrauben (8) verspannbaren Laschen (9) mit die Spannschrauben (8) aufnehmenden Spannschraublöchern (10) ausgebildet ist.

6. Verbindungsteil nach Anspruch 5,
**dadurch gekennzeichnet, daß** die Laschen (9) einer Klemmvorrichtung (3, 4) mindestens annähernd in Richtung der diagonal gegenüberliegenden Klemmvorrichtung (4, 3) ausgerichtet sind.

7. Verbindungsteil nach Anspruch 5 oder 6,
**dadurch gekennzeichnet, daß** die Laschen (9) gebrochene Ecken (34) aufweisen.

8. Verbindungsteil nach einem der Ansprüche 1 bis 7,
**dadurch gekennzeichnet, daß** das Befestigungsteil (2, 2') in zwei getrennte, jeweils zwei rechtwinklig zueinander stehende Wangen (11, 11', 12, 12') aufweisende Befestigungsschalen (13, 13', 14, 14') aufgeteilt ist, wobei die Teilungsebene (E) zwischen den beiden Befestigungsschalen (13, 13', 14, 14') durch die Klemmvorrichtungen (3, 4) verläuft.

9. Verbindungsteil nach Anspruch 8,
**dadurch gekennzeichnet, daß** zwei Befestigungsschalen (13', 14') eines Befestigungsteiles (2') mit je einer ihrer Stirnseiten (35) an einer Basisplatte (36) des Verbindungsteiles (5) angeschweißt sind.

10. Verbindungsteil nach Anspruch 9,
**dadurch gekennzeichnet, daß** die Befestigungsschalen (13', 14') im Bereich ihrer angeschweißten Stirnseiten (35) zur näherungsweise spielfreien oder geringfügig klemmenden Aufnahme einer Montageschiene (1) bzw. einer Profilschiene (22) beabstandet sind.

11. Verbindungsteil nach Anspruch 9 oder 10,
**dadurch gekennzeichnet, daß** die Befestigungsschalen (13', 14') im Bereich ihrer freien Stirnseiten (37) im unverspannten Zustand einen größeren Abstand zueinander aufweisen als im Bereich ihrer angeschweißten Stirnseiten (35).

12. Verbindungsteil nach einem der Ansprüche 9 bis 11,
**dadurch gekennzeichnet, daß** die Basisplatte (36) durch eine Wange (11, 12) einer weiteren Befestigungsschale (13, 14) gebildet ist.

13. Verbindungsteil nach einem der Ansprüche 9 bis 11,
**dadurch gekennzeichnet, daß** die Basisplatte (36) durch eine Wand (38) einer Montageschiene (1), einer Profilschiene (22) bzw. eines Querträgers (21) gebildet ist.

14. Verbindungsteil nach einem der Ansprüche 9 bis 11,
**dadurch gekennzeichnet, daß** die Basisplatte (36) eine verschraubbare Sockelplatte (39) ist.

15. Verbindungsteil nach einem der Ansprüche 1 bis 14,
**dadurch gekennzeichnet, daß** eine Klemmvorrichtung (3, 4) mindestens zwei zueinander beabstandete Spannschraublöcher (10) aufweist.

16. Verbindungsteil nach einem der Ansprüche 8 bis 14,
**dadurch gekennzeichnet, daß** eine Befestigungsschale (13, 14) in ihrer Längsrichtung verteilt eine Vielzahl von Spannschraublöchern (10) aufweist.

17. Verbindungsteil nach einem der Ansprüche 8 bis 14,
**dadurch gekennzeichnet, daß** die Befestigungsschale (13, 13', 14, 14') im wesentlichen rotationssymmetrisch zu einer Symmetrieachse (S) ausgebildet ist, die senkrecht zur Teilungsebene (E) steht.

18. Verbindungsteil nach einem der Ansprüche 1 bis 17,
**dadurch gekennzeichnet, daß** an dem Befestigungsteil (2) mindestens ein Haltemittel (19) für Anbauteile oder dgl. vorgesehen sind.

19. Verbindungsteil nach Anspruch 18,
**dadurch gekennzeichnet, daß** die Haltemittel (19) eine Trägeraufnahme (20) für einen quer zur Längsachse (L) des Befestigungsteiles (2) liegenden, insbesondere als Montageschiene (22) ausgebildeten Querträger (21) sind.

20. Verbindungsteil nach den Ansprüchen 12 und 19,
**dadurch gekennzeichnet, daß** das Befestigungsteil (2') die Trägeraufnahme (20) für den Querträger (21) bildet, wobei vorzugsweise an der Innenseite der Trägeraufnahme (20) Anlagenasen (23) zur Abstützung des Querträgers (21) vorgesehen sind.

21. Verbindungsteil nach einem der Ansprüche 19 oder 20,
**dadurch gekennzeichnet, daß** in der Trägeraufnahme (20) mindestens eine Bohrung (24) zur Durchführung einer Befestigungsschraube (25) zur Festlegung des Querträgers (21) vorgesehen ist.

22. Verbindungsteil nach Anspruch 19,
**dadurch gekennzeichnet, daß** die Trägeraufnahme (20) ein Zapfen (27) ist, auf den ein Querträger (21) mit einem Hohlquerschnitt aufschiebbar ist.

23. Verbindungsteil nach Anspruch 18,
**dadurch gekennzeichnet, daß** als Haltemittel (19) mindestens eine Befestigungsschiene (28) vorgesehen ist, deren Schienenachse (A) im wesentlichen parallel zur Längsachse (L) des Befestigungsteiles (2) liegt, wobei vorzugsweise zwei Befestigungsteile (2) durch eine Befestigungsschiene (28) miteinander verbunden sind.

24. Verbindungsteil nach einem der Ansprüche 1 bis 23,
**dadurch gekennzeichnet, daß** das Befestigungsteil (2) aus geformtem Blech besteht.

25. Verbindungsteil nach einem der Ansprüche 1 bis 24,
**dadurch gekennzeichnet, daß** die Innenseite des Befestigungsteiles (2) reibwerterhöhend bearbeitet ist oder Elemente zur Erhöhung des Reibwiderstandes durch Formschluß eingebracht sind.

## Claims

1. Connector for attachment on a mounting rail (1), with a fastening component (2, 2') having an at least approximately rectangular cross-section, which has sideplates (11, 11', 12, 12') and which, in the assembled condition, surrounds the mounting rail (1) on all sides with a matching cross-section formed by the sideplates (11, 11', 12. 12'), and which comprises at least one clamping device (3, 4) for the clamping fixation of the connector (5) onto the mounting rail (1), which, relative to the cross-sectional plane of the said fastening component (2, 2'), is or are arranged in the area of two diagonally opposite corners (6, 7),
**characterised in that** in the sideplates (11, 11', 12, 12') at least one bore (16) is provided for the insertion of a fixing screw (17) of the connector (5) that engages with the mounting rail (1).

2. Connector according to Claim 1,
**characterised in that** the fixing screw (17) of the connector (5) is provided for fixation with positive locking in a rail slot (18) of the mounting rail (1).

3. Connector according to Claims 1 and 2,
**characterised in that** in the sideplates (11, 11', 12, 12') of the fastening component (2, 2') in each case two bores (16) are provided, which are rotationally symmetrical relative to an axis (S) of symmetry, the said axis of symmetry being perpendicular to a parting plane (E) that divides the fastening component into two fastening shells (13, 14).

4. Connector according to any of Claims 1 to 3,
**characterised in that** the fastening component (2, 2') has a cross-section which is at least approximately square.

5. Connector according to any of claims 1 to 4,
**characterised in that** the clamping device (3, 4) is made in the form of clamping screws (8) and a pair of brackets (9) that can be tightened relative to one another by means of the said clamping screws (8), with clamping screw holes (10) for receiving the said clamping screws (8).

6. Connector according to Claim 5,
**characterised in that** the brackets (9) of one clamping device (3, 4) are orientated at least approximately in the direction of the diagonally opposite clamping device (4, 3).

7. Connector according to Claims 5 or 6,
**characterised in that** the brackets (9) have cut-off corners (34).

8. Connector according to any of claims 1 to 7,
**characterised in that** the fastening component (2, 2') is divided into two separate fastening shells (13, 13', 14, 14') each having two sideplates (11, 11', 12, 12') positioned at right-angles to one another, and the partition plane (E) between the said two fastening shells (13, 13', 14, 14') extends through the clamping devices (3, 4).

9. Connector according to Claim 8,
**characterised in that** two fastening shells (13', 14') of one fastening component (2') are in each case welded with one of their end faces (35) onto a baseplate (36) of the connector (5).

10. Connector according to Claim 9,
**characterised in that** in the area of their welded end faces (35) the fastening shells (13', 14') are spaced apart from one another so as to allow an approximately play-free or slightly clamping reception of a mounting rail (1) or of a profiled rail (22).

11. Connector according to Claims 9 or 10,
**characterised in that** in the un-tightened state, the fastening shells (13', 14') are further apart from one another in the area of their free end faces (37) than in the area of their welded end faces (35).

12. Connector according to any of Claims 9 to 11,
**characterised in that** the baseplate (36) is formed by one sideplate (11, 12) of another fastening shell (13, 14).

13. Connector according to any of Claims 9 to 11,
**characterised in that** the baseplate (36) is formed by a wall (38) of a mounting rail (1), a profiled rail (22) or a transverse support (21).

14. Connector according to any of Claims 9 to 11,
**characterised in that** the baseplate (36) is a support plate (39) attachable by screwing.

15. Connector according to any of Claims 1 to 14,
**characterised in that** a clamping device (3, 4) has at least two clamping screw holes (10) spaced apart from one another.

16. Connector according to any of Claims 8 to 14,
**characterised in that** a fastening shell (13, 14) has a plurality of clamping screw holes (10) distributed along its longitudinal direction.

17. Connector according to any of Claims 8 to 14,
**characterised in that** the fastening shell (13, 13', 14, 14') is formed essentially rotationally symmetrically relative to an axis of symmetry (S) which is perpendicular to the parting plane (E).

18. Connector according to any of claims 1 to 17,
**characterised in that** at least one holding means (19) for attachments or suchlike is/are provided on the fastening component (2).

19. Connector according to Claim 18,
**characterised in that** the holding means (19) consist of a support lodgement (20) for a transverse support (21), in particular one formed as a mounting rail (22), which extends transversely to the longitudinal axis (L) of the fastening component (2).

20. Connector according to Claims 12 and 19,
**characterised in that** the fastening component (2') forms the support lodgement (20) for the transverse support (21), and contact studs (23) are preferably provided on the inside of the support lodgement (20) to hold the transverse support (21) in place.

21. Connector according to either of Claims 19 or 20,
**characterised in that** at least one bore (24) is provided in the support lodgement (20) to receive a fastening screw (25) for the fixing of the transverse support (21).

22. Connector according to Claim 19,
**characterised in that** the support lodgement (20) is a pin (27) onto which a transverse support (21) with a hollow cross-section can be pushed.

23. Connector according to Claim 18,
**characterised in that** as the holding means (19) at least one fastening rail (28) is provided, whose rail axis (A) is essentially parallel to the longitudinal axis (L) of the fastening component (2), such that preferably two fastening components (2) are connected to one another by a fastening rail (28).

24. Connector according to any of Claims 1 to 23,
**characterised in that** the fastening component (2) consists of shaped sheet.

25. Connector according to any of claims 1 to 24,
**characterised in that** the inside of the fastening component (2) is treated to increase the value of its coefficient of friction, or elements are inserted therein to increase the frictional resistance by friction force holding.

## Revendications

1. Pièce de liaison à fixer sur un rail de montage (1), comprenant une pièce de fixation (2, 2') présentant au moins une section presque rectangulaire, laquelle pièce de fixation présente des joues (11, 11', 12, 12') et, à l'état monté, entoure de tous les côtés le rail de montage (1) ayant une section correspondante formée par les joues (11, 11', 12, 12') et qui présente au moins un dispositif de serrage (3, 4) servant à la fixation, par serrage, de la pièce de liaison (5) sur le rail de montage (1), dispositif(s) de serrage qui est ou sont disposé(s) dans la zone de deux coins (6, 7) opposés en diagonale, en référence au plan de coupe de la pièce de fixation (2, 2'),
**caractérisée en ce qu'**il est prévu, dans les joues (11, 11', 12, 12'), au moins un perçage (16) pour le passage d'une vis de fixation (17) de la pièce de liaison (5), s'engageant dans le rail de montage (1).

2. Pièce de liaison selon la revendication 1, **caractérisée en ce que** la vis de fixation (17) de la pièce de liaison (5) est prévue pour la fixation, par sûreté de forme, dans une fente (18) du rail de montage (1).

3. Pièce de liaison selon la revendication 1 ou 2, **caractérisée en ce qu'**il est prévu à chaque fois, dans les joues (11, 11', 12, 12') de la pièce de fixation (2, 2'), deux perçages (16) disposés en étant symétriques en rotation par rapport à un axe de symétrie (S), où l'axe de symétrie (S) est perpendiculaire à un plan de joint (E) qui divise la pièce de fixation en deux coques de fixation (13, 14).

4. Pièce de liaison selon l'une quelconque des revendications 1 à 3, **caractérisée en ce que** la pièce de fixation (2, 2') présente une section au moins presque carrée.

5. Pièce de liaison selon l'une quelconque des revendications 1 à 4, **caractérisée en ce que** le dispositif de serrage (3, 4) est configuré comme des vis de serrage (8) et comme une paire d'éclisses (9) comprenant des trous de vis de serrage (10) logeant les vis de serrage (8), lesquelles éclisses peuvent être serrées l'une contre l'autre par les vis de serrage (8).

6. Pièce de liaison selon la revendication 5, **caractérisée en ce que** les éclisses (9) d'un dispositif de serrage (3, 4) sont alignées au moins presque en direction du dispositif de serrage (4, 3) opposé en diagonale.

7. Pièce de liaison selon la revendication 5 ou 6, **caractérisée en ce que** les éclisses (9) présentent des coins coupés (34).

8. Pièce de liaison selon l'une quelconque des revendications 1 à 7, **caractérisée en ce que** la pièce de fixation (2, 2') est divisée en deux coques de fixation (13, 13', 14, 14') présentant à chaque fois deux joues (11, 11', 12, 12') placées verticalement à angle droit l'une par rapport à l'autre, où le plan de joint (E), entre les deux coques de fixation (13, 13', 14, 14'), s'étend à travers les dispositifs de serrage (3, 4).

9. Pièce de liaison selon la revendication 8, **caractérisée en ce que** deux coques de fixation (13', 14') d'une pièce de fixation (2') sont soudées à chaque fois par l'une de leurs faces frontales (35), sur une plaque de base (36) de la pièce de liaison (5).

10. Pièce de liaison selon la revendication 9, **caractérisée en ce que** les coques de fixation (13', 14') sont espacées dans la zone de leurs faces frontales soudées (35), par rapport au logement d'un rail de montage (1) ou d'un rail profilé (22) disposé presque sans jeu ou en étant faiblement serré.

11. Pièce de liaison selon la revendication 9 ou 10, **caractérisée en ce que** les coques de fixation (13', 14') présentent, dans la zone de leurs faces frontales libres (37), à l'état non serré, un intervalle plus grand, l'une par rapport à l'autre, que dans la zone de leurs faces frontales soudées (35).

12. Pièce de liaison selon l'une quelconque des revendications 9 à 11, **caractérisée en ce que** la plaque de base (36) est formée par une joue (11, 12) d'une autre coque de fixation (13, 14).

13. Pièce de liaison selon l'une quelconque des revendications 9 à 11, **caractérisée en ce que** la plaque de base (36) est formée par une paroi (38) d'un rail de montage (1), d'un rail profilé (22) ou d'une traverse (21).

14. Pièce de liaison selon l'une quelconque des revendications 9 à 11, **caractérisée en ce que** la plaque de base (36) est une plaque de socle (39) pouvant être vissée.

15. Pièce de liaison selon l'une quelconque des revendications 1 à 14, **caractérisée en ce qu'**un dispositif de serrage (3, 4) présente au moins deux trous de vis de serrage (10) espacés l'un de l'autre.

16. Pièce de liaison selon l'une quelconque des revendications 8 à 14, **caractérisée en ce qu'**une coque de fixation (13, 14) présente une multiplicité de trous de vis de serrage (10) répartis dans son sens longitudinal.

17. Pièce de liaison selon l'une quelconque des revendications 8 à 14, **caractérisée en ce que** la coque de fixation (13, 13', 14, 14') est configurée en étant pratiquement symétrique en rotation par rapport à un axe de symétrie (S) qui est perpendiculaire au plan de joint (E).

18. Pièce de liaison selon l'une quelconque des revendications 1 à 17, **caractérisée en ce qu'**il est prévu, sur la pièce de fixation (2), au moins un moyen de retenue (19) pour des pièces rapportées ou des moyens analogues.

19. Pièce de liaison selon la revendication 18, **caractérisée en ce que** les moyens de retenue (19) sont un logement support (20) pour une traverse (21) placée de façon transversale par rapport à l'axe longitudinal (L) de la pièce de fixation (2) et configurée en particulier comme un rail de montage (22).

20. Pièce de liaison selon les revendications 12 et 19, **caractérisée en ce que** la pièce de fixation (2') forme le logement support (20) pour la traverse (21), où il est prévu, de préférence, sur le côté intérieur du logement support (20), des ergots d'appui (23) servant à supporter la traverse (21).

21. Pièce de liaison selon la revendication 19 ou 20, **caractérisée en ce qu'**il est prévu, dans le logement support (20), au moins un perçage (24) pour le passage d'une vis de fixation (25) servant à fixer la traverse (21).

22. Pièce de liaison selon la revendication 19, **caractérisée en ce que** le logement support (20) est un tenon (27) sur lequel peut coulisser une traverse (21) à section creuse.

23. Pièce de liaison selon la revendication 18, **caractérisée en ce qu'**il est prévu comme moyen de retenue (19), au moins un rail de fixation (28) dont l'axe (A) est pratiquement parallèle à l'axe longitudinal (L) de la pièce de fixation (2) où, de préférence, deux pièces de fixation (2) sont reliées entre elles par un rail de fixation (28).

24. Pièce de liaison selon l'une quelconque des revendications 1 à 23, **caractérisée en ce que** la pièce de fixation (2) se compose d'une tôle adaptée à la forme.

25. Pièce de liaison selon l'une quelconque des revendications 1 à 24, **caractérisée en ce que** le côté intérieur de la pièce de fixation (2) est usiné pour augmenter le coefficient de frottement, ou bien des éléments sont introduits pour augmenter la résistance au frottement, par sûreté de forme.
